# FASCICULE DE BREVET EUROPEEN

(11) **EP 3 547 085 B1**
(45) Date de publication et mention de la délivrance du brevet: **09.02.2022**
(21) Numéro de dépôt: 19175591.7
(22) Date de dépôt: 06.10.2016
(51) Int. Cl.: G06F 3/01, G06F 3/042, G06F 3/0481, G06F 3/0484, G06F 3/0488, G06F 3/03

(54) **SYSTÈME DE CONCEPTION POUR AIDER À LA CONCEPTION D'UN AMÉNAGEMENT D'UNE CUISINE**
KONZEPTIONSSYSTEM ZUR UNTERSTÜTZUNG DER KONZEPTION ZUR ANORDNUNG EINER KÜCHE
DESIGN SYSTEM FOR ASSISTANCE IN DESIGNING THE LAYOUT OF A KITCHEN

(30) Priorité: 06.10.2015 BE 201505628
(43) Date de publication de la demande: 02.10.2019
(62) Demande divisionnaire de: 16192521.9
(73) Titulaire: NEXT-TECH SPRL, 4120 Neupré (BE)
(72) Inventeur: Ioannatos, Pierre, 4120 Neupré (BE); Ioannatos, Thomas, 4870 Trooz (BE)
(74) Mandataire: Gevers Patents

(56) Documents cités:
- US-A1- 2002 107 674
- US-A1- 2004 130 579
- US-A1- 2006 149 495
- BRUNS F W: "Integrated real and virtual prototyping", INDUSTRIAL ELECTRONICS SOCIETY, 1998. IECON '98. PROCEEDINGS OF THE 24 TH ANNUAL CONFERENCE OF THE IEEE AACHEN, GERMANY 31 AUG.-4 SEPT. 1998, NEW YORK, NY, USA,IEEE, US, vol. 4, 31 août 1998 (1998-08-31), pages 2137-2142, XP010308367, DOI: 10.1109/IECON.1998.724051 ISBN: 978-0-7803-4503-4

## Description

### Domaine technique

Selon un premier aspect, l'invention se rapporte à un système de conception permettant de faciliter la conception d'un aménagement d'une cuisine. Selon un deuxième aspect, l'invention se rapporte à une méthode permettant de faciliter la conception d'un aménagement d'une cuisine.

### Etat de la technique

La conception de l'aménagement d'une cuisine est parfois laborieuse. Il faut en effet tenir compte de différents critères. Bien sûr, l'espace disponible et la taille d'éléments d'aménagement variés (frigo, lave-vaisselle, armoire, évier, îlot central, cuisinière sont quelques exemples) doivent être intégrés. Il est également important de veiller au côté pratique et technique de l'aménagement. Pour évaluer le caractère pratique d'une cuisine, il faut notamment se poser la question de l'intérêt d'avoir tel élément à proximité de tel autre. Par exemple, est-ce pratique d'avoir le frigo plutôt que l'îlot central proche de la cuisinière ? Des exemples d'aspects techniques d'un aménagement qui doivent être intégrés sont : l'endroit d'une arrivée d'eau, l'endroit d'une évacuation d'eau, la puissance et la position d'une alimentation électrique. Il y a aussi des critères esthétiques à remplir pour que la cuisine soit au goût des clients.

Pour concevoir un espace tel une cuisine, on suit souvent une méthode d'essais erreurs à partir de plans. Cette manière de procéder n'est pas commode surtout lorsqu'on doit choisir des éléments d'une cuisine équipée. Il serait plus commode de pouvoir visualiser concrètement un projet d'aménagement sans qu'il soit nécessaire d'avoir une bonne capacité de vision dans l'espace à partir de plans à deux dimensions. En outre, cette méthode connue peut entrainer des erreurs si certaines contraintes techniques ne sont pas prises en compte. La demande de brevet US 2002/0107674, l'article de F. Wilhelm Bruns intitulé « Integrated real and virtual prototyping » (in Industrial Electronics Society, 1998. IECON '98. Proceedings of the 24th annual conférence of the IEEE Aachen, Germany, 31 Aug. - 4 Sept. 1998, New York, NY, USA, IEEE, US, vol. 4, 31 août 1998 (1998-08-31), pages 2137-3142, XP010308367, DOI: 10.1109/IECON.1998.724051, ISBN: 978-0-7803-4503-4), et la demande de brevet US 2004/130579, permettent une visualisation virtuelle d'objets dans un espace. Les systèmes divulgués par ces documents ne permettent toutefois pas de déterminer un projet d'aménagement d'une cuisine ou de fournir des informations sur ce projet d'aménagement de façon rapide et intuitive. De plus, l'utilisation de ces systèmes dans un tel objectif n'est pas possible pour un utilisateur non spécialisé dans l'aménagement des cuisines, sans qu'il ne commette des erreurs.

### Résumé de l'invention

Selon un premier aspect, un des buts de la présente invention est de fournir un système pour aider à la conception d'un aménagement d'une cuisine. A cet effet, les inventeurs proposent un système de conception pour aider à la conception d'un aménagement d'une cuisine selon la revendication 1.

Dans le système de conception de l'invention, les différents objets peuvent représenter différents meubles par exemple. Ils sont de taille réduite par rapport aux éléments d'aménagement qu'ils représentent. Ils ont préférentiellement globalement la même forme que les éléments d'aménagement qu'ils représentent. Ainsi, les objets ne sont pas nécessairement une forme réduite exacte d'un élément d'aménagement, même s'ils sont de taille réduite par rapport aux éléments qu'ils représentent. Un objet peut donc être n'importe quel objet réduit par exemple non représentatif de l'élément d'aménagement qu'il représente. Un objet peut donc être un pion ou une pièce de type LEGO^{®} par exemple qui représente un évier ou un frigo par exemple. Les objets peuvent être appelés des miniatures ou des représentations à l'échelle des éléments d'aménagement. La représentation n'est pas nécessairement exacte au détail près, mais elle est préférentiellement suffisante pour qu'un utilisateur puisse facilement faire le lien entre un objet et un élément d'aménagement de cuisine. Etant de tailles réduites, les objets peuvent être manipulés facilement par une personne désirant concevoir un intérieur. Il s'agit d'objets tridimensionnels qui permettent à un utilisateur de se faire une bonne idée des éléments d'aménagement qu'ils représentent, par exemple par l'intermédiaire de moyens de visualisation. En particulier, une personne peut mieux visualiser l'encombrement d'un élément d'aménagement à partir d'un tel objet le représentant qu'à partir d'un plan. En outre, ayant de préférence délimité une portion de la surface du support qui correspond à la cuisine à aménager, on peut ensuite y déposer les différents objets qui sont voulus pour l'aménagement. La création d'un projet d'aménagement d'une cuisine est donc particulièrement rapide grâce au placement des objets dans le système selon l'invention. Elle est notamment beaucoup plus rapide qu'elle ne le serait avec un logiciel classique utilisé avec une souris et un écran.

Le moyen de détermination de position permet de connaître la position des différents objets sur la surface du support dont au moins une portion peut être une réplique réduite à deux dimensions de la cuisine à aménager. Dans le cadre du présent document, la position d'un objet ou d'un élément peut inclure son orientation. Le moyen de conversion permet d'obtenir, dans la cuisine à aménager, une position d'un élément d'aménagement correspondant à un objet posé sur la surface du support. Le moyen de détermination d'aménagement permet que le système détermine automatiquement un projet d'aménagement. Pour ce faire, il utilise les positions des éléments d'aménagements dans la cuisine et une ou plusieurs contrainte(s) technique(s). L'introduction de contraintes techniques permet notamment d'éviter des erreurs dans l'aménagement. La plupart du temps, un utilisateur qui dépose les objets sur le système ne réalise pas que de telles contraintes sont intégrées. Le moyen de sortie permet de fournir des informations sur le projet d'aménagement qui prennent en compte les positions des éléments d'aménagements dans la cuisine et les contraintes techniques. La fourniture des informations sur le projet d'aménagement se fait préférentiellement par au moins un des moyens suivants: un affichage en temps réel d'une vue de la cuisine aménagée (par exemple en trois dimensions), un affichage en temps réel d'une liste d'éléments d'aménagements et de composants d'aménagements supplémentaires, un affichage en temps réel d'un plan de la cuisine comprenant les éléments d'aménagements et les composants d'aménagements supplémentaires, un export des informations (par exemple sous forme de fichiers) comprenant une telle vue et/ou une telle liste et/ou un tel plan, et une impression d'une telle vue et/ou d'une telle liste et/ou d'un tel plan.

En d'autres termes, il est possible d'avoir des informations d'aménagement de la cuisine, exploitables par exemple par un système informatique ou par un système de commande, à partir de la position d'objets présents sur la surface du support et de contraintes techniques. L'affichage de l'aménagement est beaucoup plus commode que de devoir s'imaginer ce que représente un aménagement d'une cuisine à partir de plans. Le système de conception de l'invention permet donc d'aider à la conception d'un aménagement d'une cuisine. Le système de conception de l'invention est particulièrement simple à utiliser et intuitif.

En outre, la cuisine aménagée correspondant au plan d'aménagement est réalisable et fonctionnelle car le plan d'aménagement prend en compte des contraintes techniques. L'utilisateur, bien qu'ignorant des spécificités propres à l'aménagement d'une cuisine, ne commettra pas certaines erreurs dans cet aménagement car le système de l'invention interdit, corrige ou propose des alternatives pour les actions de l'utilisateur qui engendrerait des erreurs. Les spécificités propres à l'aménagement d'une cuisine sont par exemple: le placement de composants d'aménagement supplémentaires (joues, dosserets, plans de travail, fileur) en fonction de contraintes techniques.

Le système de conception de l'invention présente d'autres avantages. L'export d'un fichier comprenant une liste d'éléments d'aménagements et de composants d'aménagements supplémentaires, ou l'impression d'une telle liste, permet de passer une commande des éléments et composants d'aménagement. On peut par exemple imprimer une liste de ces éléments sur un bon de commande ou envoyer cette liste à un ou plusieurs fournisseurs d'éléments d'aménagement se trouvant autre part. Une telle façon de procéder est particulièrement efficace et rapide. En affichant l'aménagement de l'intérieur à partir des résultats fournis par le moyen de conversion, il est possible de fournir à une personne (un client par exemple) une information particulièrement agréable à regarder. Le système de l'invention procure donc un avantage commercial. Le système de conception de l'invention permet d'avoir une aide à la réalisation d'un aménagement d'une cuisine. Cette aide peut être esthétique ou technique par exemple (aide technique pour empêcher les erreurs par exemple). Cette aide peut être automatique ou en assistant un utilisateur durant la conception de la cuisine. Il est par exemple possible d'imaginer qu'à partir des informations traitées par le système de conception de l'invention, d'autres tâches ou actions puissent être réalisées comme par exemple : conseiller un utilisateur, identifier, communiquer et corriger des erreurs éventuelles (liste non exhaustive) et éventuellement proposer des solutions alternatives. En outre, l'impression d'un plan comprenant les éléments d'aménagements et les composants d'aménagements supplémentaires permet à un installateur de directement installer les bons éléments et composants aux bons endroits, notamment en vue des évacuations et arrivées techniques.

A partir des données issues du moyen de conversion, il est possible de projeter une image à deux dimensions ou à trois dimensions, en fonction des moyens d'affichage qui sont utilisés.

Des exemples d'éléments d'aménagement sont: meuble, porte, escalier, plante, frigo, LV, cuisinière, évier, chaise, table, ilot central, meuble de cuisine, élément d'électroménager. D'autres exemples sont néanmoins possible.

Les objets peuvent représenter des mêmes éléments d'aménagement. De préférence, ils représentent des éléments d'aménagement différents. Les objets sont à échelle réduite par rapport au support sur lequel ils sont déposés.

De préférence, la portion de surface du support pour supporter les objets est essentiellement plane. De préférence, la surface du support est essentiellement plane.

Les données issues du moyen de conversion ou du moyen de détermination peuvent également être traitées par le support (quand ledit support est un écran intelligent par exemple) ou envoyées à distance, par exemple vers un autre écran. Un tel autre écran peut être au même endroit ou dans un endroit différent du système de conception de l'invention.

Un projet d'aménagement peut aussi être appelé "aménagement". Il comprend un ensemble de données sur les positions, natures, formes, tailles et autres caractéristiques de la cuisine en tant qu'espace et des pièces qui sont prévues pour être disposées dans la cuisine. Ces pièces comprennent les éléments d'aménagement, des éléments contenus dans ces éléments d'aménagement, et des composants d'aménagement supplémentaires déterminés par le système.

Dans le cadre du présent document, la face avant d'un élément d'aménagement est la face verticale normalement prévue pour être vue par l'utilisateur de la cuisine. C'est la face qui comporte la porte, la poignée, les éventuels boutons de commande. La face arrière est opposée à la face avant et est souvent proche d'un mur. Les faces latérales sont les deux autres faces verticales, qui sont en général prévues pour être situées contre une face latérale d'un autre élément d'aménagement. Dans le cadre du présent document, une ligne d'éléments d'aménagement est une suite essentiellement en ligne droite d'éléments d'aménagement adjacents par leurs faces latérales.

Une contrainte technique peut par exemple concerner les dimensions de la cuisine, les fenêtres, portes, baies vitrées et autres obstacles (cheminée, muret, ...) présents dans la cuisine, un décalage entre un mur et l'arrière d'un élément d'aménagement, un décalage entre un mur et un côté d'un élément d'aménagement, une ouverture d'une porte ou d'un tiroir, un alignement entre plusieurs éléments d'aménagement, une dimension d'un élément d'aménagement, une distance entre plusieurs éléments d'aménagement, une dimension d'un composant d'aménagement supplémentaire, une forme de l'aménagement (aménagement droit, en L ou en U), un plan de travail prévu pour couvrir des éléments d'aménagement, un contrainte liée au poids qu'un plan de travail peut supporter, une arrivée technique telle que arrivée d'eau chaude, d'eau froide, évacuation d'eau, d'électricité en 32 A, d'électricité en 16 A, de gaz, évacuation hotte, une contrainte de sécurité afin d'empêcher un utilisateur d'avoir accès à certains éléments. De préférence, une contrainte technique est une condition à vérifier et le projet d'aménagement est modifié, ou pas, selon que le résultat de cette vérification est positif ou négatif.

De préférence, le système de conception de l'invention comprend un module d'identification, les objets et ledit module d'identification étant configurés de sorte que ce dernier est apte à identifier des objets présents sur ladite portion de ladite surface dudit support. Le système de conception de l'invention est alors encore plus utile pour l'aménagement d'une cuisine car il permet d'identifier un objet présent sur au moins une portion de la surface du support. Connaissant le type d'objet présent, il est possible de déduire l'élément d'aménagement correspondant. Ce mode de réalisation préféré est particulièrement intéressant lorsque l'on désire aménager une cuisine avec des éléments d'aménagement différents.

Différentes technologies d'identification peuvent être utilisées pour identifier un objet présent sur la surface du support. Selon une implémentation possible, au moins un (de préférence, chaque) objet de ladite pluralité d'objets comprend, sur une surface externe, un code visuel apte à être scanné, et ledit module d'identification comprend un moyen de lecture pour scanner ledit code visuel. Des exemples de code visuels sont : code barre, QR code. D'autres exemples sont néanmoins possibles. De préférence, le support comprend le module d'identification.

En outre, de préférence, le module d'identification est apte à à faire correspondre chacun des objets identifiés avec un élément d'aménagement. Par exemple le système de conception peut comprendre une base de données mettant en correspondance des codes visuels présents sous les objets avec des éléments d'aménagement. Le système de conception selon l'invention est, de préférence, apte à déterminer, sur base de l'élément d'aménagement obtenu par mise en correspondance avec un objet, des caractéristiques techniques propres audit élément d'aménagement et à les fournir audit moyen de détermination d'aménagement pour qu'elles soient prises en compte dans le projet d'aménagement de la cuisine. Ces caractéristiques techniques peuvent ainsi être prises en compte comme des contraintes techniques lors de la détermination du projet d'aménagement. Ces caractéristiques techniques peuvent par exemple concerner les dimensions de l'élément d'aménagement, le type d'élément d'aménagement (lave-vaisselle, meuble, évier, meuble bas, meuble haut etc), et les configurations possibles de l'élément d'aménagement. Ces caractéristiques techniques peuvent former des contraintes techniques prise en compte par la détermination du projet d'aménagement.

Selon un mode de réalisation de l'invention, au moins un élément d'aménagement a une caractéristique technique indiquant une position d'une connexion pour une arrivée d'eau et/ou une arrivée d'électricité et les informations sur le projet d'aménagement de la cuisine comprennent une indication de position d'une connexion pour une arrivée d'eau et/ou une arrivée d'électricité. Par exemple, chaque élément d'aménagement qui nécessite une connexion d'arrivée d'eau, d'électricité et/ou de gaz, et/ou une connexion d'évacuation d'eau ou de vapeur, peut comprendre au moins une des caractéristiques techniques suivantes: type de connexion (arrivée d'eau chaude, d'eau froide, évacuation d'eau, d'électricité en 32 A, d'électricité en 16 A, de gaz, évacuation hotte), et position par rapport à l'élément d'aménagement (hauteur à l'axe, profondeur à l'axe par rapport à la face arrière, largeur à l'axe). Puisque la détermination du projet d'aménagement prend en compte ces caractéristiques techniques, un plan technique fourni par le système selon l'invention pourra par conséquent inclure toutes les indications nécessaires pour le positionnement des arrivées et évacuations correspondant dans la cuisine.

De préférence, le moyen de détermination d'aménagement est apte à imposer au moins un composant d'aménagement supplémentaire dans ledit projet d'aménagement de ladite cuisine, les informations sur le projet d'aménagement de ladite cuisine comprenant une information sur ledit au moins un composant d'aménagement supplémentaire. Il peut y avoir un ou plusieurs composants d'aménagement supplémentaires, du même type ou de types différents. Dans le cadre du présent document, un composant d'aménagement supplémentaire est toute pièce de l'aménagement de la cuisine qui n'est pas représentée par un objet sur le support. Il peut s'agir par exemple d'une joue, d'un dosseret, d'un plan de travail, d'un fileur ou d'une hotte. Préférentiellement, la détermination d'au moins un composant d'aménagement supplémentaire prend en compte au moins une contrainte technique.

Selon un mode de réalisation possible de l'invention, ledit moyen de détermination d'aménagement est apte à imposer au moins un composant d'aménagement supplémentaire dans ledit projet d'aménagement de ladite cuisine sur base de ladite au moins une contrainte technique.

Préférentiellement, ladite au moins une contrainte technique est une contrainte technique déterminée à partir d'une différence entre une longueur associée à un ou plusieurs éléments d'aménagement et une distance entre deux murs de la cuisine.

De préférence, l'au moins un composant d'aménagement supplémentaire comprend un fileur pour remplir un espace entre des éléments d'aménagement et un mur de la cuisine. Un fileur (filler en anglais), appelé aussi pièce de remplissage, est un élément d'aménagement généralement disposé entre un élément d'aménagement qui est au bout d'une ligne d'éléments d'aménagement et un mur. Il se place dans la continuité des faces avant des éléments d'aménagement de la ligne. Un fileur est un premier type de composant d'aménagement supplémentaire. Il permet notamment d'éviter de placer la face latérale de l'élément d'aménagement contre un mur. En effet, placer une face latérale contre un mur entrainerait un risque que la porte du meuble se cogne contre le mur et poserait problème au cas où le mur ne serait pas droit.

De préférence, l'au moins un composant d'aménagement supplémentaire comprend une joue pour couvrir une extrémité d'une ligne d'éléments d'aménagement et/ou le au moins un composant d'aménagement supplémentaire comprend un dosseret destiné à couvrir des faces arrière d'éléments d'aménagements. Une joue est un élément d'aménagement disposé sur une face latérale visible d'un élément d'aménagement. Elle peut avoir une fonction technique et/ou une fonction esthétique. Sa fonction technique peut être par exemple de protéger des raccords techniques pour éviter que des enfants n'y touchent ou de supporter un plan de travail. De manière préférentielle, si la joue n'a pas de fonction technique, le système donne le choix à l'utilisateur de placer ou pas la joue. Une joue est un deuxième type de composant d'aménagement supplémentaire. Selon un mode de réalisation de l'invention, la détermination d'une joue se base sur une contrainte technique relative à la distance entre la face latérale sur laquelle la joue viendrait et un mur faisant face à ladite face latérale. Par exemple, si cette distance est en-deçà d'un certain seuil, un fileur est ajouté au projet d'aménagement lors de la détermination d'au moins composant d'aménagement supplémentaire, et si cette distance est au moins égale à ce seuil, une joue est ajoutée au projet d'aménagement lors de la détermination d'au moins composant d'aménagement supplémentaire. Un dosseret est un élément d'aménagement disposé sur une face arrière visible d'un élément d'aménagement. Il peut avoir une fonction technique et/ou une fonction esthétique, comme la joue. Un dosseret est un troisième type de composant d'aménagement supplémentaire. Selon un mode de réalisation de l'invention, la détermination d'un dosseret se base sur une contrainte technique relative à la distance entre la face arrière sur laquelle le dosserait viendrait et un mur faisant face à ladite face arrière. Par exemple, si cette distance est au moins égale à un certain seuil, un dosseret est ajouté au projet d'aménagement lors de la détermination d'au moins composant d'aménagement supplémentaire.

De préférence, le au moins un composant d'aménagement supplémentaire comprend un plan de travail. Le plan de travail repose sur au moins une partie des éléments d'aménagement. Une première contrainte technique est que, la plupart du temps, un plan de travail est nécessaire pour couvrir certains éléments d'aménagement. Une deuxième contrainte technique pour le plan de travail peut être qu'il déborde suffisamment pour couvrir les poignées des éléments d'aménagement sous lui, afin d'éviter qu'un utilisateur ne s'y accroche. Une autre contrainte technique peut être liée aux tailles des panneaux standards qui forment le plan de travail. Selon un mode de réalisation de l'invention, le moyen de détermination d'aménagement détermine la position de ces panneaux pour qu'un minimum de panneaux soit utilisé.

Selon un mode de réalisation de l'invention, le système de conception est agencé pour permettre à un utilisateur d'ajouter une extension au plan de travail dans un cadre limitatif fourni par une contrainte technique relative à un poids que l'extension du plan de travail peut supporter et/ou relative à une taille de panneaux formant le plan de travail. En particulier, des moyens d'affichage du système de conception peuvent afficher des icônes indiquant où le plan de travail peut être étendu. Les icônes sont préférentiellement affichées sur le côté des objets aux endroits où une extension est possible au vu de la ou les contrainte(s) technique(s). Le cadre limitatif est tel que ces icônes n'apparaissent que là où le plan de travail peut être étendu tout en respectant la ou les contrainte(s) technique(s). La contrainte technique relative à un poids que l'extension du plan de travail peut supporter est liée au fait que l'extension du plan de travail est en porte-à-faux par rapport aux éléments d'aménagement. En effet, si un objet lourd est déposé sur l'extrémité de l'extension, un couple de force proportionnel à la distance s'exerce sur la partie du plan de travail fixée aux éléments d'aménagement. Il est donc préférable d'interdire de trop grandes extensions, ou de forcer l'utilisateur à placer des poteaux ou une joue sous l'extension s'il veut une grande extension. La contrainte technique relative à une taille de panneaux formant le plan de travail est liée au fait que ces panneaux ont une taille standard.

De préférence, la détermination d'un projet d'aménagement de ladite cuisine comprend une vérification d'au moins une contrainte technique et, au cas où ladite au moins une contrainte technique vérifiée n'est pas respectée, un affichage d'un message ou une correction automatique du projet (07) d'aménagement de façon à ce que celui-ci respecte ladite au moins une contrainte technique vérifiée. Le moyen de détermination d'aménagement est apte à effectuer ladite vérification, ledit affichage et ladite correction automatique. Plusieurs contraintes techniques peuvent être vérifiées l'une après l'autre, par exemple en suivant un diagramme décisionnel. Par exemple, si les objets sont mal alignés entre eux ou mal alignés par rapport à un mur du projet d'aménagement, le système de conception peut les aligner entre eux ou les aligner par rapport au mur. Par exemple, si un mur de la cuisine est affiché sur le support, les objets peuvent être placés contre un mur par l'utilisateur. Le système est alors prévu pour décaler les éléments d'aménagement du mur dans le projet d'aménagement, car dans une cuisine, il est préféré que les éléments d'aménagement ne soient pas contre les murs. Par exemple, si l'utilisateur met un meuble de façon à ce que sa porte ne s'ouvre pas, le système le lui fera savoir par un message. De même s'il place un meuble d'angle au centre d'une ligne d'éléments d'aménagement.

De préférence, le moyen de détermination de position comprend un écran tactile au niveau de la surface du support. Cela permet d'avoir un système de conception d'une cuisine particulièrement facile à concevoir et à utiliser. En outre, un tel mode de réalisation préféré confère un aspect innovant, moderne, 'high-tech' au système de conception de l'invention. Cette caractéristique technique préférée du système de conception de l'invention permet d'apporter un caractère moderne dans le domaine de l'aménagement de cuisines. Par rapport à un système informatique permettant de concevoir l'aménagement d'une cuisine à partir d'un ordinateur, le système de conception de l'invention est plus intuitif et plus simple à utiliser, notamment par la présence des différents objets représentant sous taille réduite différents éléments d'aménagement. Ces objets peuvent être manipulés par une personne avant de les placer sur la surface du support.

Différentes technologies de détermination de position peuvent être utilisées pour déterminer la position d'un objet sur la surface du support. Selon une implémentation possible, chaque objet comprend une antenne émettrice, et le moyen de détermination de position comprend au moins une antenne réceptrice apte à capter une onde électromagnétique émise par l'antenne émettrice d'un objet pour déterminer sa position sur ladite surface du support. De préférence, une telle (ou de telles) antenne(s) réceptrice(s) est (sont) situées dans le support. Selon une autre implémentation possible, au moins une portion de chaque objet comprend un matériau conducteur électrique, et le moyen de détermination de position comprend au moins un capteur inductif. Dans ce cas, l'au moins un capteur inductif est de préférence situé au niveau du support. D'autres exemples de technologies de détermination de position sont : système de caméras, méthode infrarouge, système mécanique ou électronique. Dans le premier cas, il est possible de prévoir un système de caméras (par exemple de type infrarouge), placées dans le support par exemple, qui est apte à scanner des objets qui ont été déposés sur au moins une portion de la surface du support. A l'aide d'un code imprimé placé sur un objet ou de part la forme d'un objet, le système de caméras (de type infrarouges ou autres) peut détecter et préférentiellement identifier un objet placé sur au moins une portion de la surface du support. Une autre technologie de détermination de position utilise un jeu de caméras placées au-dessus du support et qui permettent de détecter des objets placés sur au moins une portion de la surface du support. De préférence, ce jeu de caméras est en outre apte à identifier de tels objets. Des technologies de type mécanique ou électronique utilisent des connexions directes entre le support et des objets posés sur au moins une portion de la surface du support pour déterminer la position d'un objet. De préférence, ces technologies permettent en outre d'identifier un objet posé sur au moins une portion de la surface du support. Une technologie de type mécanique peut par exemple différencier différents objets en fonction de leur poids. Dans ce cas-là, un module d'identification comprend de préférence un ou plusieurs capteurs de pression intégrés dans le support.

De préférence, le système de conception de l'invention comprend en outre des moyens d'affichage pour afficher une information d'aménagement à partir d'une information issue dudit moyen de conversion et/ou dudit module d'identification. Différents moyens d'affichage peuvent être utilisés. Un exemple de moyen d'affichage est un écran. De préférence, cet écran est intégré dans au moins une portion de la surface du support. Dans ce cas, le système de conception de l'invention est particulièrement commode à utiliser. Un utilisateur peut déposer des objets sur la surface du support et visualiser directement l'aménagement correspondant en inspectant la portion de la surface du support où est affichée l'information d'aménagement. Préférentiellement, l'affichage a aussi lieu sur la portion de surface supportant les objets. Par exemple, les murs, portes, fenêtres, baies vitrées et autres obstacles (par exemple une cheminée, un muret, ...) de la cuisine y sont affichés, de façon que les objets soient positionnés par l'utilisateur par rapport aux murs, portes, fenêtres, baies vitrées et autres obstacles. L'affichage peut aussi comprendre l'affichage d'icônes à côté des objets. Ces icônes peuvent servir à modifier les caractéristiques, notamment techniques, des éléments d'aménagement correspondant aux objets. Par exemple, une icône pour un meuble de rangement permet de configurer l'intérieur de ce meuble de rangement, de choisir le modèle, de choisir sa couleur.

De préférence, le système de conception de l'invention comprend un moyen d'interfaçage pour aider à la conception de l'aménagement de la cuisine. De préférence, ce moyen d'interfaçage est intégré au niveau d'au moins une portion de la surface du support. Une telle portion d'interfaçage peut comprendre par exemple un écran tactile. L'interfaçage est alors particulièrement facile. Ce moyen d'interfaçage peut être utilisé pour différentes fonctions. Il peut par exemple être utilisé pour imposer ou modifier des caractéristiques techniques géométriques de la cuisine à aménager, comme par exemple : la forme de la cuisine, sa taille. Il est également possible de prévoir un moyen d'interfaçage qui permet d'ajouter une ou plusieurs fenêtres, une ou plusieurs portes, une ou plusieurs baies vitrées et un ou plusieurs obstacles dans la cuisine à aménager. Le moyen d'interfaçage pourrait aussi être apte à fournir différentes informations sur les éléments d'aménagement représentés par les objets, comme par exemple les couleurs disponibles, les matériaux disponibles, la taille de ces éléments d'aménagement, leur poids, leur disponibilité en stock, leur prix. D'autres caractéristiques, notamment techniques, des éléments d'aménagement pourraient être obtenues et/ou visualisées par l'intermédiaire d'un tel moyen d'interfaçage. Le moyen d'interfaçage pourrait aussi conseiller une liste d'éléments d'aménagement à utiliser pour un type d'espace donné à aménager, par exemple une liste de meubles et d'électroménager pour une cuisine.

Plutôt que d'intégrer cette fonction d'interfaçage dans une portion de la surface du support, le système de conception de l'invention pourrait comprendre un module d'interfaçage en-dehors de cette surface. Un exemple de moyen d'interfaçage externe est un écran avec une souris et/ou un clavier d'ordinateur.

De préférence, le système de conception de l'invention comprend une mémoire pour enregistrer de projet d'aménagement de la cuisine. Cette mémoire peut être intégrée dans le support ou être externe à ce dernier. Grâce à ce mode de réalisation préféré, il est donc possible de créer et d'enregistrer différents projets d'aménagement. Il est également possible de rouvrir un projet d'aménagement sur lequel on a travaillé précédemment, et éventuellement de le modifier et/ou d'imprimer une liste de commande comprenant les éléments d'aménagement retenus. En outre, la mémoire peut contenir une base de données permettant de faire correspondre les objets avec les éléments d'aménagement. La mémoire peut être éloignée du support, par exemple, elle peut être sur un serveur informatique.

Selon l'invention le moyen de détermination d'aménagement est apte à modifier la position et/ou l'orientation des éléments d'aménagement fournie par le moyen de conversion afin de satisfaire l'au moins une contrainte technique. Cela permet de corriger les erreurs faites par un utilisateur lors du placement des objets. Par exemple, le système est apte à déterminer un angle entre un élément d'aménagement représenté par un objet et un mur de la cuisine et à aligner ledit élément d'aménagement avec ledit mur si cet angle est dans un deuxième intervalle déterminé. La contrainte technique est ici une contrainte d'alignement des éléments d'aménagement. Un autre exemple est de décaler ou de coller à un mur certains éléments d'aménagement alors que les objets correspondant sont placés trop près ou trop loin du mur.

Selon un mode de réalisation, le système est apte à déterminer un angle entre un élément d'aménagement représenté par un objet et un mur de la cuisine et à afficher un message si cet angle est dans un premier intervalle déterminé. Cela indique à un utilisateur que l'objet placé est tellement mal orienté que le système n'est pas certain de l'orientation voulue.

Selon un mode de réalisation, le moyen de sortie comprend un ou plusieurs dispositifs parmi les suivants: une imprimante, des moyens d'affichage, et une connexion à internet.

Selon un mode de réalisation, le moyen de détermination de position et le moyen de conversion font partie d'un même ordinateur.

Selon un deuxième aspect, les inventeurs proposent une méthode pour aider à la conception d'un aménagement d'une cuisine selon la revendication 10.

Les avantages mentionnés pour le système de conception s'appliquent à la méthode, mutatis mutandis. En particulier, la méthode de l'invention est une aide à la conception d'un aménagement d'une cuisine. La méthode de l'invention est aussi particulièrement commode et intuitive pour concevoir l'aménagement d'une cuisine. La méthode de l'invention permet d'éviter des erreurs et d'aller particulièrement vite lors de la conception d'un aménagement.

Les différents modes de réalisation préférés du système de conception de l'invention s'appliquent à la méthode, mutatis mutandis. En particulier, l'étape de déterminer un projet d'aménagement de ladite cuisine peut comprendre une détermination d'au moins un composant d'aménagement supplémentaire, préférentiellement sur base de l'au moins une contrainte technique, et le projet d'aménagement de ladite cuisine peut comprendre le au moins un composant d'aménagement supplémentaire. Dans ce cas, les informations sur le projet d'aménagement de ladite cuisine comprennent une information sur le au moins un composant d'aménagement supplémentaire. En outre, l'étape de déterminer un projet d'aménagement de ladite cuisine peut également comprendre une vérification d'au moins une contrainte technique et, au cas où l'au moins une contrainte technique vérifiée n'est pas respectée, un affichage d'un message ou une correction automatique du projet d'aménagement de façon à ce que celui-ci respecte l'au moins une contrainte technique vérifiée.

Selon un mode de réalisation, la méthode de l'invention comprend en outre, après l'étape de déposer des objets et avant l'étape de déterminer un projet d'aménagement de la cuisine, une étape de d'identifier des objets présent sur ladite portion et de faire correspondre chacun d'entre eux avec un élément d'aménagement et une étape de déterminer, sur base des éléments d'aménagement ainsi obtenus, des caractéristiques techniques propres audit élément d'aménagement, lesdites caractéristiques techniques propres audit élément d'aménagement étant utilisées lors de la détermination du projet d'aménagement de la cuisine. Les caractéristiques techniques peuvent par exemple être considérées comme des contraintes techniques lors de la détermination du projet d'aménagement de la cuisine. Cela permet au système de connaitre des caractéristiques techniques propres aux éléments d'aménagement représentés par les objets.

En outre, la méthode de l'invention peut comprendre une étape d'identifier un ou plusieurs objets posé(s) sur au moins une portion de la surface du support. La méthode de l'invention peut aussi comprendre une étape de fournir une information d'aménagement de la cuisine à aménager à partir d'un résultat de l'étape de conversion d'une position d'un objet en une position d'un élément d'aménagement correspondant et/ou à partir d'un résultat de l'étape d'identification d'un objet.

Selon un mode de réalisation, la méthode de l'invention comprend une étape d'affichage d'une demande d'information à un utilisateur, une étape de réception d'une information d'utilisateur et une prise en compte de l'information d'utilisateur lors de l'étape de déterminer un projet d'aménagement de ladite cuisine. L'affichage de la demande d'information peut par exemple prendre la forme d'un message ou d'une icône. L'utilisateur peut alors entrer une information d'utilisateur, par exemple concernant des tiroirs ou plateaux à l'intérieur d'un élément d'aménagement ou une extension d'un plan de travail, ou le placement d'une joue. Cette information est reçue par le système et prise en compte pour le projet d'aménagement, par exemple comme une contrainte technique.

Selon un mode de réalisation, la méthode de l'invention comprend un affichage, sur la portion de ladite surface dudit support prévue pour que des objets y soient déposés, d'un schéma représentant des murs de la cuisine. Par exemple, l'utilisateur peut avoir décrit les murs, potentiellement aussi les fenêtres, portes, baies vitrées et autres obstacles (cheminée, muret, ...), de sa cuisine via un moyen d'interfaçage et une vue du dessus représentant ces murs peut apparaitre sur la portion de surface. L'utilisateur peut alors placer les objets par rapport aux murs comme il le désire.

Selon un mode de réalisation, un placement d'un objet en-dehors d'une surface comprise entre les murs de la cuisine génère un affichage d'un message. Par exemple un message d'erreur peut être affiché par les moyens d'affichage.

Selon un mode de réalisation, l'étape de déterminer un projet d'aménagement de ladite cuisine comprend de déterminer une distance entre deux éléments d'aménagement, et si cette distance est en-dessous d'un certain seuil, et d'aligner entre eux lesdits deux éléments d'aménagement.

Selon un mode de réalisation, la détermination du projet d'aménagement utilise un schéma décisionnel pour prendre en compte l'information de position des éléments d'aménagement et la ou les contrainte(s) technique(s).

Selon un mode de réalisation, le projet d'aménagement de la cuisine comprend un plan indiquant la position dans la cuisine des éléments d'aménagement et, si le projet en comporte, la position dans la cuisine des composants d'aménagement supplémentaires.

Selon un mode de réalisation, le projet d'aménagement de la cuisine comprend une liste des éléments d'aménagement et, si le projet en comporte, des composants d'aménagement supplémentaires.

Selon un mode de réalisation, lesdites informations sur le projet d'aménagement comprennent un plan indiquant la position dans la cuisine des éléments d'aménagement et, si le projet en comporte, la position dans la cuisine des composants d'aménagement supplémentaires.

Selon un mode de réalisation, lesdites informations sur le projet d'aménagement comprennent une liste des éléments d'aménagement et, si le projet en comporte, des composants d'aménagement supplémentaires.

Selon un mode de réalisation, ladite liste comporte une information sur un prix d'au moins un élément d'aménagement.

Selon un mode de réalisation, lesdites informations sur le projet d'aménagement comprennent une image en vue tridimensionnelle de la cuisine comportant les éléments d'aménagement et, si le projet en comporte, des composants d'aménagement supplémentaire.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre une vue du dessus du support d'un mode de réalisation possible du système de conception de l'invention;
- la Fig.2 montre une vue du dessus du support d'un autre mode de réalisation possible du système de conception de l'invention;
- la Fig.3 montre une vue en perspective du support correspondant au même mode de réalisation du système de conception de l'invention que celui exposé à la figure précédente;
- la Fig.4 montre des exemples possibles d'objets;
- la Fig.5 montre une face externe d'objets comprenant un code visuel;
- la Fig.6 montre une vue du dessus d'un mode de réalisation possible du système de conception selon l'invention;
- la Fig.7 montre une vue en perspective du même mode de réalisation possible du système de conception selon l'invention;
- la Fig.8 montre une vue en perspective d'un utilisateur en train d'utiliser le système de conception de l'invention tout en imaginant sa future cuisine;
- la Fig. 9 est un diagramme de décision illustrant une méthode pour aider à la conception d'un aménagement d'une cuisine selon un mode de réalisation de l'invention;
- la Fig.10 est une vue de face d'une ligne d'éléments d'aménagement comprise entre deux murs; et
- la Fig. 11 montre une vue en perspective d'un ilot central d'une cuisine.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

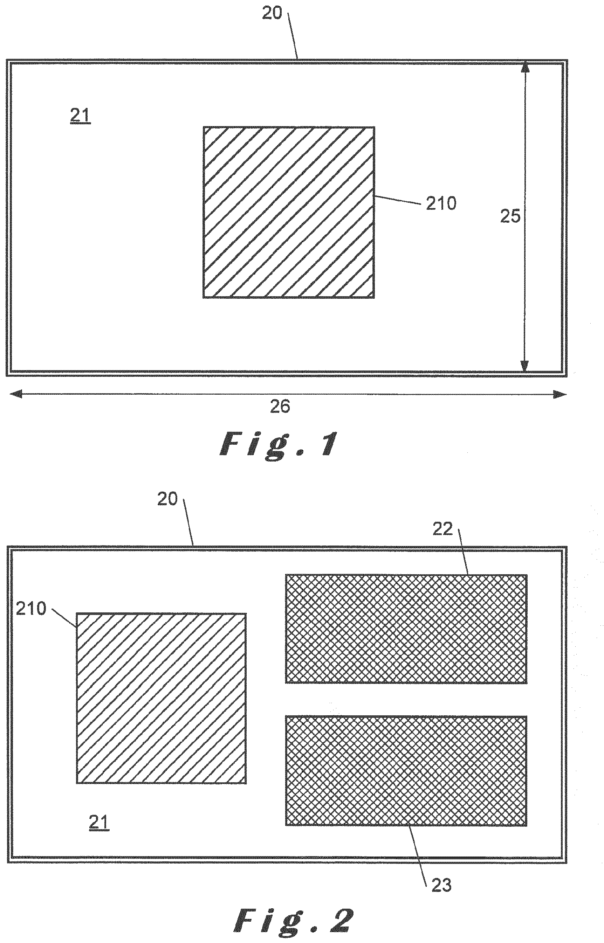

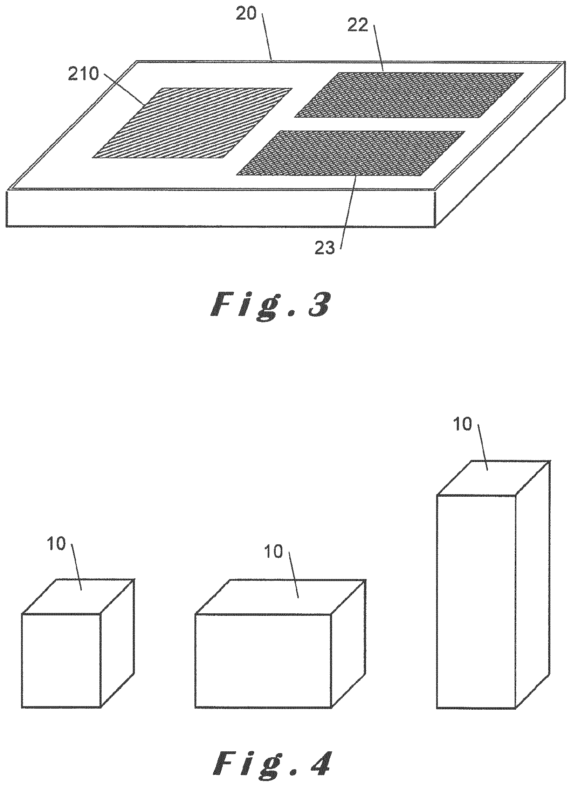

Le système de conception 1 de l'invention comprend différents éléments. La figure 1 montre un premier élément. Il s'agit d'un support 20 comprenant une surface 21 sur laquelle on peut déposer un ou plusieurs objets 10. Ces objets 10 représentent sous taille réduite des éléments d'aménagement. La figure 4 montre quatre objets 10 à titre d'exemple. Ces objets 10 pourraient avoir d'autres formes que celles montrées à la figure 4. Les objets 10 peuvent être de taille et/ou de forme différente ou identiques.

Une zone de travail 210 de la surface 21 du support 20 représente de préférence une réplique en miniature d'une vue de la cuisine à aménager. Par exemple, cette zone de travail 210 peut représenter une taille réduite d'une vue du dessus de la cuisine à aménager. Cette zone de travail 210 pourrait aussi représenter une coupe verticale de la cuisine à aménager, par exemple un mur d'une pièce sur lequel on aimerait disposer différents éléments d'aménagement tels des meubles. A la figure 1, la zone de travail 210 ne recouvre pas toute la surface du support 20 qui est visible selon cette coupe. Il s'agit d'une variante préférée non limitative. Il pourrait en effet être envisagé de prévoir une zone de travail 210 s'étendant sur l'entièreté de la surface 21 du support 20 qui est visible à la figure 1. La zone de travail 210 permet de supporter un ou plusieurs objets 10.

Différentes tailles du support 20 sont possibles. En reprenant une vue du dessus telle que celle montrée à la figure 1 et si le support 20 a la forme d'un rectangle selon cette vue, sa largeur 25 est de préférence comprise entre 50 cm et 2 m, tandis que sa longueur 26 est de préférence comprise entre 75 cm et 3 m. L'épaisseur du support 20 selon une direction perpendiculaire au plan de la figure 1 varie de préférence entre 1 cm et 50 cm. D'autres épaisseurs sont néanmoins possibles. De préférence, le support 20 est lui-même déposé sur un socle permettant à une personne debout ou assise de déposer facilement des objets sur le support 20 et en particulier sur la zone de travail 210 et de visualiser ladite zone de travail 210 du dessus. Ainsi, si l'utilisateur est assis, le support 20 sera de préférence positionné à une hauteur comprise entre 70 cm et 1 m par rapport au sol. S'il est prévu d'utiliser le système de conception 1 debout, le support 20 sera de préférence positionné à une hauteur comprise entre 1 m et 1,5 m.

Le système de conception 1 de l'invention comprend en outre un moyen de détermination de position. Les objets 10 et ce moyen de détermination de position sont configurés de sorte que ce dernier est apte à déterminer une position d'un objet 10 placé sur la zone de travail 210. Le moyen de détermination de position peut être apte à déterminer les positions X, Y d'un objet 10 ainsi que son orientation.

Différents types de moyens de détermination de position peuvent être utilisés. De préférence, le moyen de détermination de position comprend un écran tactile au niveau d'au moins une portion de la surface 21 du support 20. De préférence, un tel écran tactile est couplé à un module informatique permettant de donner une position X, Y et une orientation d'un objet 10 placé sur la zone de travail 210 de la surface 21 du support 20. D'autres exemples sont néanmoins possibles. Il pourrait être par exemple envisagé que chaque objet 10 comprenne une antenne émettrice et que le support 20 comprenne une ou plusieurs antennes réceptrices pour capter une onde électromagnétique émise par une antenne émettrice d'un objet 10. A partir de l'analyse du signal reçu, il est alors possible de déterminer la position d'un objet 10. Selon un autre exemple, chaque objet 10 comprend au moins une portion faite dans un matériau conducteur électrique et le support 20 comprend un ou plusieurs capteurs inductifs. D'autres moyens de détermination de position pourraient être envisagés comme par exemples ceux décrits ci-dessus.

Le système de conception 1 de l'invention comprend en outre un moyen de conversion pour convertir une information de position d'un objet 10 posé sur au moins une portion 210 de ladite surface 21 dudit support 20 en une information de position d'un élément d'aménagement dans ladite cuisine. Un exemple de moyen de conversion est un module informatique de conversion. Il peut être intégré dans le support 20 ou être externe à ce dernier.

Le système de conception 1 de l'invention comprend en outre un moyen de détermination d'aménagement agencé pour une détermination 106 d'un projet 107 d'aménagement de la cuisine 40 sur base de l'information de position des éléments d'aménagement 50 dans ladite cuisine 40 et sur base d'au moins une contrainte technique. Préférentiellement, le projet 107 d'aménagement de la cuisine 40 comprend un plan indiquant la position des éléments d'aménagement 50 dans la cuisine 40.

Le système de conception 1 de l'invention comprend en outre un moyen de sortie pour fournir des informations sur le projet d'aménagement de ladite cuisine. Le moyen de sortie peut comprendre une imprimante pour imprimer directement des informations sur le projet d'aménagement. Le moyen de sortie peut comprendre des moyens d'affichage 22, pour afficher, par exemple en temps réel, des informations sur le projet d'aménagement. Le moyen de sortie peut comprendre une connexion à internet, par exemple pour envoyer un message comprenant des informations sur le projet d'aménagement.

Selon un mode de réalisation de l'invention, le moyen de détermination de position et le moyen de conversion font partie d'un même ordinateur.

Différents types de supports 20 peuvent être utilisés. De préférence, le support 20 est un écran tactile. Dans ce cas, l'écran est de préférence divisé en une ou plusieurs zones (ou portions). Une portion représente alors la zone de travail 210 destinée à recevoir le ou les objets 10.

Les figures 2 et 3 montrent un autre mode de réalisation préféré du support 20 où ce dernier comprend trois zones différentes. Une zone est la zone de travail 210 destinée à recevoir les objets 10.

Une autre zone représente des moyens d'affichage 22. Quand le support 20 est un écran tactile, cette zone représente une portion dudit écran par exemple. Grâce à ces moyens d'affichage 22 ou zone d'affichage, il est possible de visualiser la cuisine à aménager avec différents éléments d'aménagement correspondant à différents objets 10 présents sur la zone de travail 210. Cette visualisation peut se faire en direct, ce qui est très commode pour un utilisateur du système de conception 1 de l'invention désirant aménager une cuisine. En fonction du résultat qu'il peut voir à partir des moyens d'affichage 22, l'utilisateur peut décider de remplacer un objet 10 par un autre ou d'en déplacer un ou plusieurs. La conception de l'aménagement d'une cuisine est particulièrement efficace grâce à cette visualisation directe. Les moyens d'affichage 22 peuvent permettre de voir la cuisine à aménager et/ou de l'aménager à deux ou trois dimensions. Quand il s'agit d'une vue à deux dimensions, des visualisations selon différentes coupes ou différentes prises de vue sont possibles (vue du dessus, vue d'un côté par exemple).

Dans l'exemple montré à la figure 2, la surface 21 du support 20 comprend aussi une portion d'interfaçage 23. Cette portion d'interfaçage 23 peut remplir plusieurs fonctions. Il peut être envisagé de pouvoir paramétrer la cuisine à aménager. Par exemple, fixer des dimensions géométriques d'une pièce à aménager, ajouter ou retirer une ou plusieurs porte(s), fenêtre(s). Cette portion d'interfaçage 23 peut également permettre à un utilisateur de connaître des caractéristiques, notamment techniques, d'éléments d'aménagement représentés par les objets 10, comme par exemple : les couleurs disponibles, la disponibilité en stock, le poids, ... La portion d'interfaçage 23 peut également conseiller un aménagement particulier de la cuisine. Selon certaines versions préférées du système de conception de l'invention, la portion d'interfaçage 23 permet de consulter et/ou enregistrer un projet d'aménagement, imprimer une liste d'éléments d'aménagement, passer commande. Dans un autre mode de réalisation possible, le système de conception 1 de l'invention comprend un moyen d'interfaçage 23 externe audit support 20. Il peut s'agir par exemple d'un écran d'ordinateur externe avec un clavier et une souris, ou d'un écran tactile externe audit support 20.

La figure 4 montre trois exemples d'objets 10. D'autres formes sont possibles. De préférence, quand un objet 10 a la forme d'un parallélépipède rectangle, il a une taille comprise entre (2*2*2) et (20*20*20) cm³. Différents matériaux et couleurs peuvent être utilisés pour les objets 10. Des exemples de matériaux qui peuvent être utilisés pour les objets 10 sont : le bois, une matière plastique (PVC par exemple), un métal tel l'aluminium.

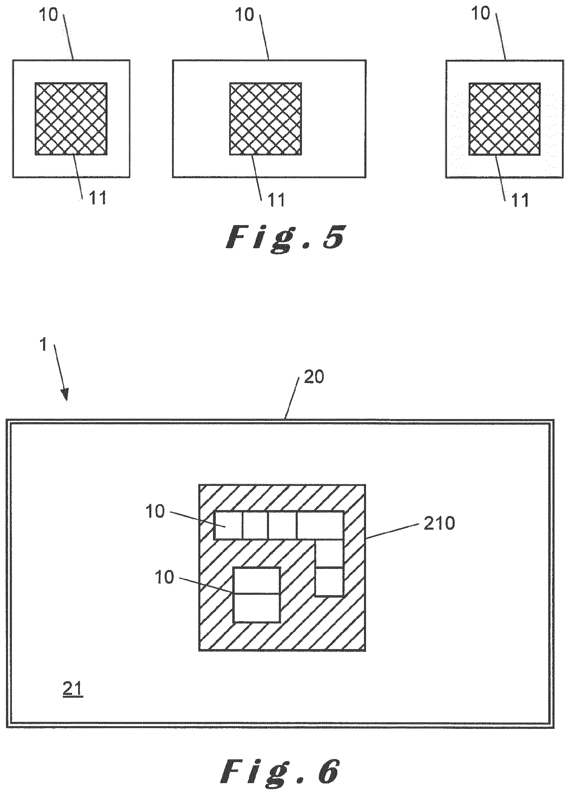

De préférence, le système de conception 1 de l'invention comprend un module d'identification, les objets 10 et ce dernier étant configurés de sorte qu'il soit apte à identifier un objet 10 présent sur la zone de travail 210. Différentes technologies peuvent être utilisées pour identifier un objet 10 présent sur la zone de travail 210. Selon un exemple illustré à la figure 5, chaque objet 10 comprend de préférence sur une surface externe (par exemple sa face du bas) un code visuel 11 apte à être scanné, par exemple par des moyens de lecture faisant partie du support 20. Le système de conception 1 de l'invention est alors apte à distinguer et identifier les différents objets 10 présents sur la zone de travail 210 et à fournir une information d'aménagement de la cuisine comprenant différents éléments d'aménagement correspondant aux différents objets 10 identifiés sur la zone de travail 210.

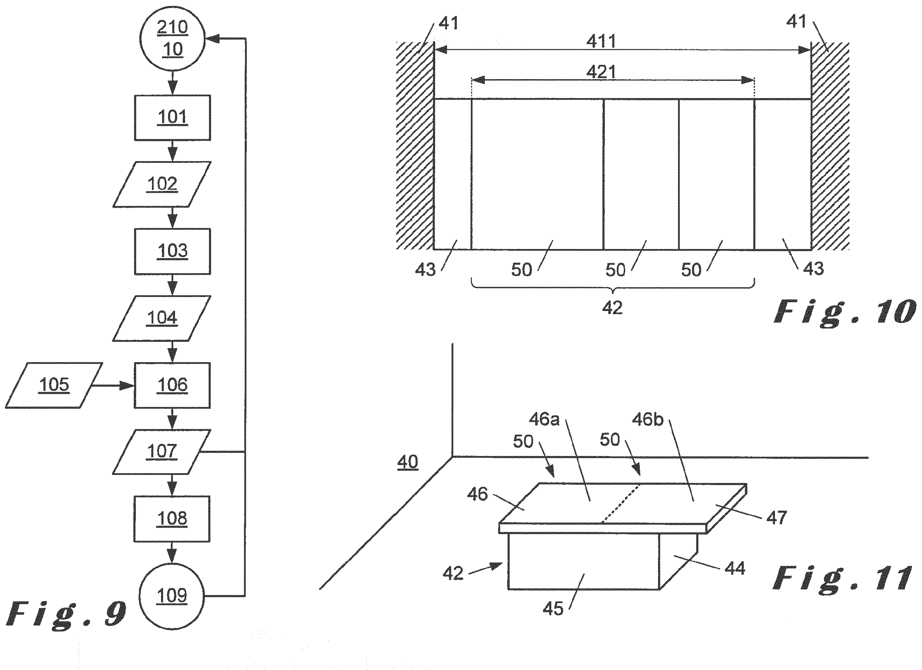

Selon un mode de réalisation de l'invention, des caractéristiques techniques sont associées aux éléments d'aménagement 50. De telles caractéristiques techniques peuvent par exemple être les dimensions de l'élément d'aménagement, ses couleurs possibles, ses aménagements intérieurs possibles, ses connexions pour raccordement en eau, gaz et/ ou électricité. Ces caractéristiques techniques sont préférentiellement prises en compte lors de la détermination 106 du projet d'aménagement (figure 9).

De préférence, le système de conception 1 de l'invention comprend une mémoire pour enregistrer un projet aménagement de la cuisine à partir d'une information générée par le moyen de détermination d'aménagement. Une telle mémoire peut être intégrée dans le support 20 ou être externe.

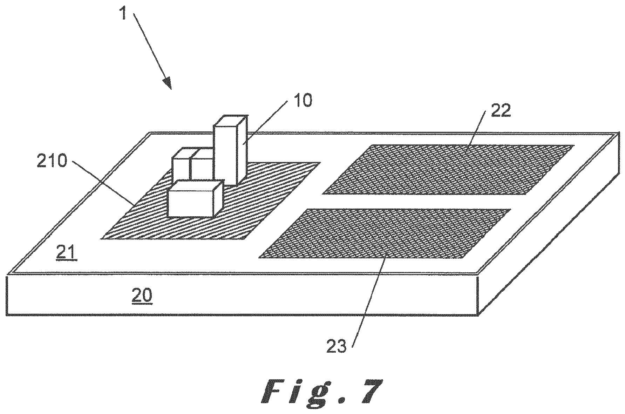

Les figures 6 et 7 montrent deux exemples de système de conception 1 de l'invention où différents objets 10 sont posés sur la zone de travail 210 du support 20. Pour le mode de réalisation préféré de la figure 7, la surface 21 du support 20 comprend un écran d'affichage 22 et un écran d'interfaçage 23 en plus de la zone de travail 210.

De préférence, la méthode de l'invention comprend en outre une étape d'identifier un objet 10 posé sur la portion 210 de la surface 21 du support 20. Pour cela, différentes technologies peuvent être utilisées comme cela a été décrit précédemment.

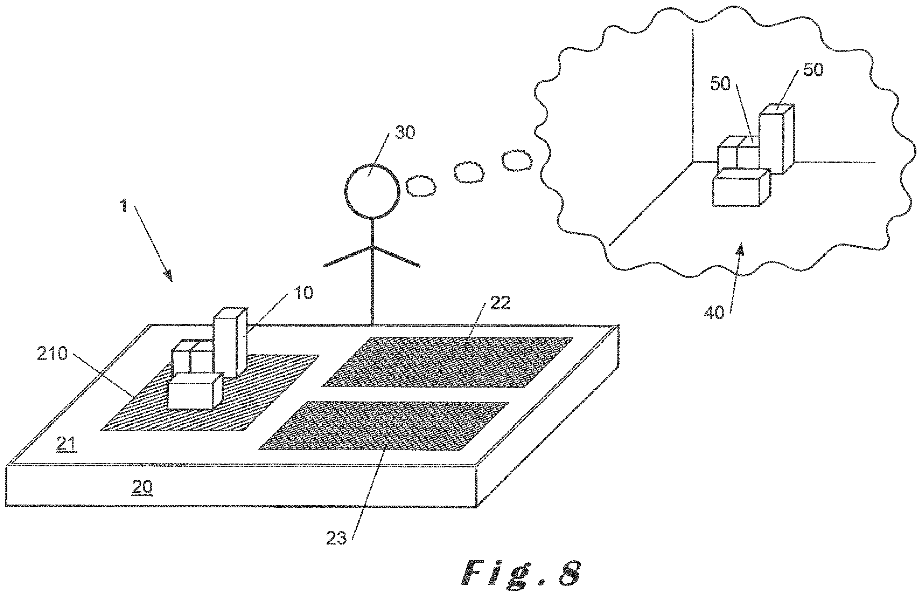

La figure 8 illustre un utilisateur 30 en train d'utiliser un système 1 selon un mode de réalisation de l'invention. Au départ, il entre dans le système 1, grâce à l'écran d'interfaçage 23, les dimensions et positions des murs, fenêtres, portes, baies vitrées et autres obstacles de sa cuisine 40. Préférentiellement, un schéma des murs, fenêtres, portes, baies vitrées et autres obstacles en vue du dessus s'affiche sur la zone de travail 210 du support 20 et une vue tridimensionnelle des murs, fenêtres et portes en vue du dessus s'affiche sur l'écran d'affichage 22. Lorsque l'utilisateur 30 conceptualise un aménagement de la cuisine 40 comprenant des éléments d'aménagement 50, il place les objets 10 correspondant à ces éléments d'aménagement 50 sur la zone de travail 210 du support 20. Les objets 10 sont identifiés et leur position est déterminée. Des icônes correspondant à l'identification des objets 10 peuvent apparaitre sur la zone de travail 210 à côté des objets. Ces icônes correspondent à des demandes d'information à l'utilisateur 30, pour qu'il puisse modifier des caractéristiques techniques des éléments d'aménagement 50 représentés par ces objets 10. Ces caractéristiques techniques sont ensuite prises en compte par le système pour déterminer un projet d'aménagement 107 et des informations 109 sur le projet d'aménagement (figure 9). En outre, l'écran d'affichage 22 peut afficher des illustrations tridimensionnelles des éléments d'aménagement 50 à leur position dans la cuisine 40. L'utilisateur 30 peut, en déplaçant les objets et regardant la visualisation de la cuisine 40 sur l'écran d'affichage 22, aménager sa cuisine 40 en changeant de nombreuses fois d'avis.

De façon préférentielle, si l'utilisateur 30 place un objet 10 en-dehors de la cuisine 40 (c'est-à-dire en-dehors de la surface délimitée par les murs affichés), un message d'erreur est affiché. De même si un objet 10 est placé au-dessus d'un mur ou d'un autre obstacle.

Selon un deuxième aspect, l'invention se rapporte à une méthode pour aider à la conception d'un aménagement d'une cuisine. Un mode de réalisation de la méthode est illustré à la figure 9. Lorsque des objets 10 sont placés sur la zone de travail 210, une détermination 101 de leur position est réalisée, qui fournir une information 102 de position indiquant la position de chaque objet 10 sur la surface 21. Une conversion 103 convertit l'information 102 de position des objets 10 en information de position des éléments d'aménagement 50 dans la cuisine 40. Cette conversion 103 comprend préférentiellement un changement d'échelle pour passer de l'échelle des objets 10 à l'échelle des éléments d'aménagement 50. Une détermination 106 d'un projet d'aménagement utilise l'information de position des éléments d'aménagement 50 dans la cuisine 40 et des contraintes techniques 105 pour déterminer un projet d'aménagement 107 de la cuisine 40.

Une sortie 108 fournit des informations 109 sur le projet 107 d'aménagement, préférentiellement sous une forme lisible par un dispositif informatique ou par un être humain. Cette sortie 108 peut par exemple comprendre l'affichage sur l'écran d'affichage 22 d'illustrations tridimensionnelles des éléments d'aménagement 50 à leur position dans la cuisine 40. Les étapes 101 à 109 sont préférentiellement réalisées chaque fois qu'un objet 10 est ajouté sur la surface 21, enlevé de la surface 21 ou déplacé sur la surface 21. En outre, lorsque l'utilisateur le souhaite, la sortie 108 sort un plan du projet 107 d'aménagement comprenant les informations 109 sur le projet 107 d'aménagement et/ou une liste comprenant les informations 109 sur le projet 107 d'aménagement.

Selon un mode de réalisation, la méthode pour aider à la conception d'un aménagement d'une cuisine selon l'invention comprend après le dépôt des objets 10 et avant la détermination 106 du projet 107 d'aménagement de la cuisine, une étape de mise en correspondance des objets 10 déposés avec des éléments d'aménagement 50, et une étape de détermination, sur base des éléments d'aménagement 50 ainsi identifiés, des caractéristiques techniques propres auxdits éléments d'aménagement 50.

Selon un mode de réalisation, la méthode pour aider à la conception d'un aménagement d'une cuisine selon l'invention comprend en outre une étape ou plusieurs étape(s) de configuration des éléments d'aménagement. Cela permet de déterminer le modèle des éléments d'aménagement 50, le type de rangement interne, le type de porte, les finitions, la couleur, etc. Une étape de configuration peut comprendre des demandes d'information à l'utilisateur 30, pour qu'il puisse modifier des caractéristiques techniques des éléments d'aménagement 50, comme décrit en référence à la figure 8.

Par exemple, si l'utilisateur 30 pose un objet représentant un lave-vaisselle, le système 1 lui demande de choisir le modèle de lave-vaisselle. Suite à cela, le système 1 détermine les caractéristiques techniques propres à ce modèle de lave-vaisselle et les prend en compte pour la détermination 106 du projet 107 d'aménagement. Par conséquent, la position de la connexion à une arrivée d'eau, la position de l'évacuation d'eau et la position de l'arrivée d'électricité sont automatiquement intégrées dans un plan fourni par le système 1.

De préférence, la détermination 106 du projet d'aménagement comprend la détermination d'au moins une ligne d'éléments d'aménagement 42 (visible figure 10). Par exemple, si deux éléments d'aménagement 50 ont des faces latérales distantes de moins d'un certain seuil, ils sont préférentiellement considérés comme faisant partie d'une même ligne 42 et sont automatiquement alignés.

Selon un mode de réalisation, la détermination 106 du projet d'aménagement utilise un schéma décisionnel pour prendre en compte l'information de position 104 des éléments d'aménagement 50 et la ou les contrainte(s) technique(s) 105. Préférentiellement, le schéma décisionnel traite les éléments d'aménagement 50 un par un en leur appliquant une procédure automatique.

Selon un mode de réalisation, la détermination 106 du projet d'aménagement détermine la forme de l'aménagement de la cuisine 40, c'est-à-dire si la cuisine 40 est en ligne simple, en forme de L ou en forme de U. Cette détermination de la forme de l'aménagement utilise de préférence une détermination de lignes d'éléments d'aménagement 42. Par exemple, si l'aménagement de la cuisine 40 ne comporte qu'une seule ligne 42 d'éléments d'aménagement et ne comporte pas de meuble d'angle, sa forme est préférentiellement en ligne simple et un premier schéma décisionnel est utilisé par la détermination 106 du projet d'aménagement.

De préférence, s'il y a un meuble d'angle parmi les éléments d'aménagement 50, celui-ci est traité en premier par un schéma décisionnel utilisé par la détermination 106 du projet d'aménagement. Cela permet que le meuble d'angle soit bien alignés sur les deux murs, les autres éléments d'aménagement 50 étant positionnés par rapport à ce meuble d'angle dans le schéma décisionnel.

De préférence, la détermination 106 du projet d'aménagement comprend la vérification d'une ou plusieurs des contraintes techniques 105 suivantes : un plan de travail doit de préférence couvrir les éléments d'aménagement faisant moins d'une certaine hauteur, la distance entre la face arrière d'un élément d'aménagement 50 et un mur doit de préférence être dans un intervalle déterminé, la distance entre la face latérale d'un élément d'aménagement 50 et un mur doit de préférence être dans un intervalle déterminé, la distance entre deux éléments d'aménagement 50 doit de préférence être dans un intervalle déterminé, l'extension d'un plan de travail 46 en porte-à-faux (figure 11) ne doit pas de préférence dépasser un seuil déterminé, une arrivée d'eau, de gaz ou d'électricité doit de préférence ou une évacuation d'eau doit de préférence être raccordable au raccordement correspondant dans les murs, le sol ou le plafond de la cuisine. Lorsque la contrainte technique 105 vérifiée n'est pas satisfaite, le système 1 soit corrige automatiquement le projet 107 d'aménagement, soit affiche un message d'erreur pour l'utilisateur afin que celui-ci modifie la position des objets 10 ou entre dans le système 1 des données concernant le projet 107 d'aménagement.

Par exemple, si les objets 10 correspondant à des éléments d'aménagements 50 d'une même ligne 42 ne sont pas les uns contre les autres, lesdits éléments d'aménagements 50 seront automatiquement placés les uns contre les autres dans le projet 107 d'aménagement si la distance entre leurs faces latérales est en-deçà d'un certain seuil.

Par exemple, si les objets 10 correspondant à des éléments d'aménagements 50 d'une même ligne 42 ne sont pas alignés, lesdits éléments d'aménagements 50 seront automatiquement alignés dans le projet 107 d'aménagement.

Par exemple, si la distance entre la face arrière d'un élément d'aménagement 50 et un mur est en-deçà d'une première valeur, ledit élément d'aménagement est décalé du mur dans le projet 107 d'aménagement. Par exemple, si la distance entre la face arrière d'un élément d'aménagement 50 et un mur est au-delà d'une deuxième valeur, un dosseret 45 (figure 11) est prévu à l'arrière dudit élément d'aménagement dans le projet 107 d'aménagement.

Par exemple, pour chaque objet 10, la détermination 101 de position détermine l'orientation de l'objet 10 et la conversion 103 détermine l'orientation de l'élément d'aménagement 50 correspondant dans la cuisine 40. La détermination 106 du projet d'aménagement détermine l'angle entre l'élément d'aménagement 50 et un mur de la cuisine 40. Si cet angle est dans un premier intervalle déterminé, le système 1 affiche un message d'erreur pour l'utilisateur, afin qu'il aligne mieux l'objet 10. Si cet angle est dans un deuxième intervalle déterminé, la détermination 106 du projet d'aménagement modifie cet angle pour que l'élément d'aménagement 50 soit aligné avec le mur.

Selon un mode de réalisation, la détermination 106 du projet d'aménagement détermine un "état" pour chacune des faces avant, arrière et latérales d'un élément d'aménagement 50. Par exemple, l'état 1 d'une face peut être que la face est collée, notamment contre un autre élément d'aménagement 50 ou un mur. Par exemple, l'état 2 d'une face peut être que la face est décollée, notamment d'un autre élément d'aménagement 50 ou un mur, mais qu'elle est invisible pour quelqu'un dans la cuisine 40. Par exemple, l'état 3 d'une face peut être que la face est décollée, notamment d'un autre élément d'aménagement 50 ou un mur, et qu'elle est visible pour quelqu'un dans la cuisine 40.

Préférentiellement, la détermination 106 du projet d'aménagement vérifie une ou plusieurs contrainte(s) technique(s) en fonction des états des faces des éléments d'aménagement et potentiellement en fonction du type de meuble (meuble bas, meuble colonne, meuble d'angle à droite, meuble d'angle à gauche, lave-vaisselle, etc).

Selon un mode de réalisation, la détermination 106 du projet d'aménagement détermine un ou plusieurs composant(s) d'aménagement supplémentaire(s) qui seront intégrés dans le projet 107 d'aménagement et dont des caractéristiques techniques sont ensuite reprises dans les informations 109 sur le projet 107 d'aménagement. La détermination de composant d'aménagement supplémentaire peut être combinée avec la vérification de contrainte technique.

Par exemple, comme illustré à la figure 10, des éléments d'aménagement 50 peuvent former une ligne 42 située entre deux murs 41 de la cuisine 40. Selon un mode de réalisation de l'invention, le système 1 détermine une longueur 421 de la ligne 42 et une distance 411 entre les deux murs 41. Si la longueur 421 de la ligne 42 est plus petite que la distance 411 entre les deux murs 41 diminuée de deux fois une taille minimale de fileur 43, le système 1 affiche un message d'erreur. Sinon, si la différence entre la distance 411 entre les deux murs 41 et la longueur 421 de la ligne 42 est plus petite que deux fois une taille maximale de fileur 43, des fileurs 43 sont automatiquement placés entre les extrémités de la ligne 42 et les murs 41 dans le projet 107 d'aménagement. La taille minimale et la taille maximale des fileurs 43 sont au préalable mémorisées dans le système 1.

La figure 11 illustre une situation où deux éléments d'aménagement 50 forment un ilot central en ligne 42. Les faces arrière de ces deux éléments d'aménagement 50 sont éloignées de tout mur. Un dosseret 45 est alors automatiquement ajouté sur les faces arrière de ces deux éléments d'aménagement 50 dans le projet 107 d'aménagement. De plus, deux faces latérales d'éléments d'aménagement 50, situées aux extrémités de la ligne 42, sont éloignées de tout mur. Des joues 44 sont alors automatiquement ajoutées sur ces faces latérales de dans le projet 107 d'aménagement.

En outre, de préférence, un plan de travail 46 est automatiquement ajouté dans le projet 107 d'aménagement. De préférence, le système 1 affiche une icône sur la droite de la ligne 42 permettant à l'utilisateur d'étendre le plan de travail 46 par une extension 47 en porte-à-faux. L'extension 47 autorisée par le système 1 sera limitée par d'une part par la taille maximale de panneaux 46a, 46b formant le plan de travail 46 et d'autre part parce que ladite extension 47 doit pouvoir supporter un certain poids sans s'effondrer. Selon un mode de réalisation de l'invention, le système 1 propose à l'utilisateur 30 de placer une joue ou des poteaux sous l'extension 47 pour la soutenir.

Selon un mode de réalisation de l'invention, le système 1 peut, dans certaines circonstances, proposer à l'utilisateur 30, via un message affiché, d'ajouter une joue facultative sur certaines faces latérales d'éléments d'aménagement 50. Préférentiellement, cette joue facultative a principalement une fonction esthétique. Par exemple, lorsqu'une face latérale d'un élément d'aménagement 50 est dans un état 2, le système 1 peut proposer à l'utilisateur 30 de placer une joue.

Selon un mode de réalisation de l'invention, le dosseret 45 est automatiquement ajouté au projet 107 d'aménagement quand la face arrière d'un élément d'aménagement 50 est dans un état 3.

Selon un mode de réalisation de l'invention, lorsqu'un élément d'aménagement 45 identifié comme un meuble d'angle n'est pas situé dans un angle dans le projet 107 d'aménagement, le système 1 affiche un message d'erreur à l'utilisateur 30.

De préférence, la méthode de l'invention comprend une étape de fournir une information d'aménagement de la cuisine à aménager à partir d'un résultat de l'étape de détermination de position et/ou de l'étape d'identification d'un objet 10 posé sur une portion de la surface 21 du support 20. De préférence, la méthode de l'invention comprend une étape d'enregistrer un projet d'aménagement d'une cuisine et/ou de modifier un projet existant et/ou d'imprimer une liste d'éléments d'aménagement.

De préférence, la méthode de l'invention comprend une étape d'analyser un projet d'aménagement généré pour vérifier s'il y a des éventuelles erreurs. De préférence, la méthode de l'invention comprend une étape de détecter des éventuelles erreurs dans un projet d'aménagement. De préférence, la méthode de l'invention comprend une étape de conseiller un utilisateur pour satisfaire des critères esthétiques et/ou techniques.

De préférence, le système de conception et la méthode de l'invention donnent la possibilité à un utilisateur de voir l'aménagement de la cuisine au travers de lunettes holographiques, de lunettes à réalité virtuelle ou de lunettes à réalité augmentée. De telles lunettes font alors partie intégrante du système de conception de l'invention. Selon ce mode de réalisation préféré, l'utilisateur peut se mouvoir virtuellement à l'intérieur de la cuisine aménagée à partir des objets déposé sur la zone de travail 210 de la surface 21 du support 20. De préférence, ce mode de réalisation préféré est utilisé lorsque le système de conception 1 de l'invention comprend une mémoire pour enregistrer un projet d'aménagement. Selon un mode de réalisation préféré, le système de conception 1 de l'invention comprend un programme informatique pour suggérer des prochains éléments d'aménagement pour la cuisine. Cela peut se faire par exemple par l'intermédiaire d'un moyen d'interfaçage 23 tel que décrit précédemment.

Le système de conception et la méthode de l'invention peuvent être utilisés pour tous les types d'aménagement d'un espace intérieur ou extérieur comme par exemple : une cuisine, une salle de bain, un salon.

Selon un mode de réalisation possible de l'invention, celle-ci concerne un système de conception 1 pour aider à la conception d'un aménagement d'un espace et comprenant :
- une pluralité d'objets 10 pour représenter sous taille réduite une pluralité d'éléments d'aménagement dudit espace;
- un support 20 comprenant une surface 21 dont au moins une portion est apte à supporter un ou plusieurs objets 10 de ladite pluralité d'objets 10 ;
- un moyen de détermination de position,
   lesdits objets 10 et ledit moyen de détermination de position étant configurés de sorte que ce dernier est apte à déterminer une position d'un objet 10 posé sur au moins une portion 210 de ladite surface 21 dudit support 20 ;
- un moyen de conversion pour convertir une information de position d'un objet 10 posé sur au moins une portion 210 de ladite surface 21 dudit support 20 en une information de position d'un élément d'aménagement dans ledit espace.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Système de conception 1 selon la revendication 1.

## Revendications

1. Système de conception (1) pour aider à la conception d'un aménagement d'une cuisine (40) et comprenant :
- une pluralité d'objets (10) pour représenter sous taille réduite une pluralité d'éléments d'aménagement (50) de ladite cuisine (40), lesdits objets (10) étant tous à une même échelle réduite par rapport aux éléments d'aménagement (50) ;
- un support (20) comprenant une surface (21) dont au moins une portion (210) est apte à supporter lesdits objets (10) ;
- un moyen de détermination de position,
lesdits objets (10) et ledit moyen de détermination de position étant configurés de sorte que ce dernier est apte à déterminer (101) une position pour chacun des objets (10) posés sur ladite portion (210) ;
- un moyen de conversion pour convertir une information (102) de position des objets (10) posés sur ladite portion (210) en une information de position (104) dans ladite cuisine (40) des éléments d'aménagement (50) représentés par lesdits objets (10) ;
- un moyen de détermination d'aménagement pour déterminer (106) un projet (107) d'aménagement de ladite cuisine (40) sur base de l'information de position (104) des éléments d'aménagement (50) dans ladite cuisine (40) obtenue par ledit moyen de conversion et sur base d'au moins une contrainte technique (105) d'un aménagement de cuisine,
le moyen de détermination d'aménagement étant apte à modifier la position et/ou l'orientation des éléments d'aménagement (50) fournie par l'information de position (104) provenant du moyen de conversion afin de satisfaire l'au moins une contrainte technique (105) ; et
- un moyen de sortie pour fournir (108) des informations (109) sur le projet (107) d'aménagement de ladite cuisine (40) déterminé par ledit moyen de détermination d'aménagement ;
ledit projet (107) d'aménagement et lesdites informations (109) sur ledit projet (107) d'aménagement comprenant un plan indiquant une position dans ladite cuisine (40) des éléments d'aménagement (50) et/ou une liste des éléments d'aménagement (50).

2. Système de conception (1) selon la revendication précédente, **caractérisé en ce qu'**il comprend en outre un module d'identification, lesdits objets (10) et ledit module d'identification étant configurés de sorte que ce dernier est apte à identifier des objets (10) présents sur ladite portion (210) et à faire correspondre chacun d'entre eux avec un élément d'aménagement (50), le système de conception (1) étant apte à déterminer, sur base de ladite correspondance, des caractéristiques techniques propres audit élément d'aménagement (50) et à les fournir audit moyen de détermination d'aménagement pour qu'elles soient prises en compte dans le projet (107) d'aménagement de la cuisine (40).

3. Système de conception (1) selon la revendication précédente, **caractérisé en ce qu'**au moins un élément d'aménagement (50) a une caractéristique technique indiquant une position d'une connexion pour une arrivée d'eau et/ou une arrivée d'électricité et **en ce que** les informations (109) sur le projet (107) d'aménagement de la cuisine (40) comprennent une indication de position d'une connexion pour une arrivée d'eau et/ou une arrivée d'électricité.

4. Système de conception (1) selon l'une quelconque des revendications précédentes, **caractérisé en ce que** ladite au moins une contrainte technique (105) est une contrainte technique (105) déterminée à partir d'une différence entre une longueur associée à un ou plusieurs éléments d'aménagement (50) et une distance (411) entre deux murs (41) de la cuisine (40).

5. Système de conception (1) selon l'une quelconque des revendications précédentes, **caractérisé en ce que** ledit moyen de détermination d'aménagement est apte à imposer au moins un composant d'aménagement supplémentaire (43; 44; 45; 46) dans ledit projet (107) d'aménagement de ladite cuisine (40) sur base de ladite au moins une contrainte technique (105), les informations (109) sur le projet (107) d'aménagement de ladite cuisine (40) comprenant une information sur ledit au moins un composant d'aménagement supplémentaire (43; 44; 45; 46).

6. Système de conception (1) selon la revendication précédente, **caractérisé en ce que** l'au moins un composant d'aménagement supplémentaire (43; 44; 45; 46) comprend un ou plusieurs composant(s) d'aménagement parmi les suivants: un fileur (43) pour remplir un espace entre des éléments d'aménagement (50) et un mur (41) de la cuisine (40), une joue (44) pour couvrir une extrémité d'une ligne (42) d'éléments d'aménagement, un dosseret (45) destiné à couvrir des faces arrière d'éléments d'aménagements (50), un plan de travail (46).

7. Système de conception (1) selon l'une quelconque des revendications précédentes, **caractérisé en ce qu'**il comprend en outre un moyen d'interfaçage (23) pour aider à la conception de l'aménagement de la cuisine, ledit moyen d'interfaçage étant intégré dans ledit support (20).

8. Système de conception (1) selon l'une quelconque des revendications précédentes, comprenant en outre une mémoire pour enregistrer le projet (107) d'aménagement de ladite cuisine (40).

9. Système de conception (1) selon l'une quelconque des revendications précédentes, **caractérisé en ce qu'**il est apte à déterminer un angle entre un élément d'aménagement (50) représenté par un objet (10) et un mur de la cuisine (40) et à afficher un message si cet angle est dans un premier intervalle déterminé.

10. Méthode pour aider à la conception d'un aménagement d'une cuisine (40) mise en oeuvre à l'aide d'un système de conception (1) selon l'une quelconque des revendications précédentes et comprenant les étapes suivantes :
- fournir une pluralité d'objets (10) représentant sous taille réduite une pluralité d'éléments d'aménagement (50) de ladite cuisine (40), lesdits objets (10) étant tous à une même échelle réduite par rapport aux éléments d'aménagement (50) ;
- fournir un support (20) comprenant une surface (21) dont au moins une portion (210) est apte à supporter lesdits objets (10) ;
- déposer des objets (10) de ladite pluralité d'objets (10) sur ladite portion (210) ;
- déterminer (101), avec le moyen de détermination de position, une position pour chacun des objets (10) posés sur ladite portion (210) ;
- convertir (102), avec le moyen de conversion, une information (102) de position des objets (10) posés sur ladite portion (210) en une information de position (104) dans ladite cuisine (40) des éléments d'aménagement (50) représentés par lesdits objets (10) ;
- déterminer (106), avec le moyen de détermination d'aménagement, un projet (107) d'aménagement de ladite cuisine (40) sur base de l'information de position (104) des éléments d'aménagement (50) dans ladite cuisine (40) obtenue à l'étape précédente et sur base d'au moins une contrainte technique (105) d'un aménagement de cuisine,
l'étape de détermination (106) comprenant une vérification de l'au moins une contrainte technique (105) et, si celle-ci n'est pas respectée, une modification d'une position et/ou d'une orientation des éléments d'aménagement (50) fournie par l'information de position (104) afin de satisfaire l'au moins une contrainte technique (105) ; et
- fournir (108), avec le moyen de sortie, des informations (109) sur le projet (107) d'aménagement de ladite cuisine (40) déterminé à l'étape précédente ;
ledit projet (107) d'aménagement et lesdites informations (109) sur ledit projet (107) d'aménagement comprenant un plan indiquant une position dans ladite cuisine (40) des éléments d'aménagement (50) et/ou une liste des éléments d'aménagement (50).

11. Méthode selon la revendication précédente, comprenant en outre, après l'étape de déposer des objets (10) et avant l'étape de déterminer (106) un projet (107) d'aménagement de la cuisine, une étape d'identifier des objets (10) présents sur ladite portion (210) et de faire correspondre chacun d'entre eux avec un élément d'aménagement (50), et une étape de déterminer, sur base de ladite correspondance, des caractéristiques techniques propres audit élément d'aménagement (50), lesdites caractéristiques techniques propres audit élément d'aménagement (50) étant utilisées lors de la détermination (106) du projet (107) d'aménagement de la cuisine (40).

12. Méthode selon la revendication 10 ou 11, **caractérisée en ce que** l'étape de déterminer (106) un projet (107) d'aménagement de ladite cuisine (40) comprend une vérification d'au moins une contrainte technique (105) et, au cas où ladite au moins une contrainte technique (105) vérifiée n'est pas respectée, un affichage d'un message ou une correction automatique du projet (107) d'aménagement de façon à ce que celui-ci respecte ladite au moins une contrainte technique (105) vérifiée.

13. Méthode selon l'une quelconque des revendications 10 à 12, **caractérisée en ce qu'**elle comprend une étape d'affichage d'une demande d'information à un utilisateur, une étape de réception d'une information d'utilisateur et une prise en compte de l'information d'utilisateur lors de l'étape de déterminer (106) un projet (107) d'aménagement de ladite cuisine (40).

14. Méthode selon l'une quelconque des revendications 10 à 13, comprenant un outre un affichage, sur la portion (210) de ladite surface (21) dudit support (20) prévue pour que des objets (10) y soient déposés, d'un schéma représentant des murs de la cuisine (40).

## Patentansprüche

1. Konzeptionssystem (1) zur Unterstützung bei der Konzeption einer Einrichtung einer Küche (40), und Folgendes umfassend:
- eine Vielzahl von Objekten (10) zur Darstellung in verkleinerter Größe einer Vielzahl von Einrichtungselementen (50) der Küche (40), wobei die Objekte (10) allesamt in einem verkleinerten Maßstab in Bezug auf die Einrichtungselemente (50) sind;
- eine Unterlage (20), die eine Oberfläche (21) umfasst, von der mindestens ein Abschnitt (210) imstande ist, die Objekte (10) zu tragen;
- ein Positionsbestimmungsmittel, wobei die Objekte (10) und das Positionsbestimmungsmittel derart konfiguriert sind, dass letzteres imstande ist, eine Position für jedes der Objekte (10) zu bestimmen (101), die in den Abschnitt (210) gestellt werden;
- ein Umwandlungsmittel zum Umwandeln einer Information (102) zur Position der Objekte (10), die in den Abschnitt (210) gestellt werden, in eine Positionsinformation (104) in der Küche (40) der Einrichtungselemente (50), die durch die Objekte (10) dargestellt sind;
- ein Einrichtungsbestimmungsmittel zum Bestimmen (106) eines Einrichtungsprojekts (107) der Küche (40) auf Basis von Positionsinformationen (104) der Einrichtungselemente (50) in der Küche (40), die durch das Umwandlungsmittel erhalten werden, und auf Basis mindestens einer technischen Einschränkung (105) einer Kücheneinrichtung, wobei das Einrichtungsbestimmungsmittel imstande ist, die Position und/ oder die Ausrichtung der Einrichtungselemente (50) zu ändern, die durch die Positionsinformationen (104) bereitgestellt wird, die vom Umwandlungsmittel stammen, um mindestens eine technische Einschränkung (105) zu erfüllen; und
- ein Ausgangsmittel zum Bereitstellen (108) der Informationen (109) über das Einrichtungsprojekt (107) der Küche (40), das von dem Einrichtungsbestimmungsmittel bestimmt wird;
wobei das Einrichtungsprojekt (107) und die Informationen (109) über das Einrichtungsprojekt (107) einen Plan umfassen, der eine Position der Einrichtungselemente (50) und/oder eine Liste mit den Einrichtungselementen (50) in der Küche (40) anzeigt.

2. Konzeptionssystem (1) nach dem vorstehenden Anspruch, **dadurch gekennzeichnet, dass** es weiter ein Identifikationsmodul umfasst, wobei die Objekte (10) und das Identifikationsmodul derart konfiguriert sind, dass dieses letztere imstande ist, Objekte (10) zu identifizieren, die in dem Abschnitt (210) vorhanden sind, und jedes unter ihnen einem Einrichtungselement (50) entsprechen lässt, wobei das Konzeptionssystem (1) imstande ist, auf Basis der Entsprechung technische Merkmale zu bestimmen, die dem Einrichtungselement (50) eigen sind, und sie dem Einrichtungsbestimmungsmittel bereitzustellen, damit sie in dem Einrichtungsprojekt (107) der Küche (40) berücksichtigt werden.

3. Konzeptionssystem (1) nach dem vorstehenden Anspruch, **dadurch gekennzeichnet, dass** mindestens ein Einrichtungselement (50) ein technisches Merkmal aufweist, das eine Position eines Anschlusses für eine Wasserzuführung und/oder Stromzuführung anzeigt, und dadurch, dass die Informationen (109) über das Einrichtungsprojekt (107) der Küche (40) eine Anzeige einer Position eines Anschlusses für eine Wasserzuführung und/oder Stromzuführung umfassen.

4. Konzeptionssystem (1) nach einem der vorstehenden Ansprüche, **dadurch gekennzeichnet, dass** die mindestens eine technische Einschränkung (105) eine technische Einschränkung (105) ist, die aus einem Unterschied zwischen einer Länge, die einem oder mehreren Einrichtungselementen (50) zugeordnet ist, und einem Abstand (411) zwischen zwei Wänden (41) der Küche (40) bestimmt wird.

5. Konzeptionssystem (1) nach einem der vorstehenden Ansprüche, **dadurch gekennzeichnet, dass** das Einrichtungsbestimmungsmittel imstande ist, mindestens eine zusätzliche Einrichtungskomponente (43; 44; 45; 46) in dem Einrichtungsprojekt (107) der Küche (40) auf Basis der mindestens einen technischen Einschränkung (105) vorzuschreiben, wobei die Informationen (109) über das Einrichtungsprojekt (107) der Küche (40) eine Information über die mindestens eine zusätzliche Einrichtungskomponente (43; 44; 45; 46) umfassen.

6. Konzeptionssystem (1) nach dem vorstehenden Anspruch, **dadurch gekennzeichnet, dass** die mindestens eine zusätzliche Einrichtungskomponente (43; 44; 45; 46) eine oder mehrere Einrichtungskomponente(n) aus den Folgenden umfasst: eine Blende (43) zum Ausfüllen eines Freiraumes zwischen den Einrichtungselementen (50) und einer Wand (41) der Küche (40), eine Wange (44) zum Abdecken eines Endes einer Zeile (42) an Einrichtungselementen, einen Rückenteil (45), der dazu bestimmt ist, die Rückseiten von Einrichtungselementen (50) abzudecken, eine Arbeitsplatte (46).

7. Konzeptionssystem (1) nach einem der vorstehenden Ansprüche, **dadurch gekennzeichnet, dass** es weiter ein Schnittstellenmittel (23) zur Unterstützung der Konzeption der Einrichtung der Küche umfasst, wobei das Schnittstellenmittel in die Unterlage (20) integriert ist.

8. Konzeptionssystem (1) nach einem der vorstehenden Ansprüche, weiter einen Speicher zum Speichern des Einrichtungsprojekts (107) der Küche (40) umfassend.

9. Konzeptionssystem (1) nach einem der vorstehenden Ansprüche, **dadurch gekennzeichnet, dass** es imstande ist, einen Winkel zwischen einem durch ein Objekt (10) dargestellten Einrichtungselement (50) und einer Wand der Küche (40) zu bestimmen, und eine Meldung anzuzeigen, wenn dieser Winkel in einem ersten bestimmten Intervall liegt.

10. Verfahren zur Unterstützung bei der Konzeption einer Einrichtung einer Küche (40), das mithilfe eines Konzeptionssystems (1) nach einem der vorstehenden Ansprüche umgesetzt wird, und die folgenden Schritte umfassend:
- Bereitstellen einer Vielzahl von Objekten (10), die in verkleinerter Größe eine Vielzahl von Einrichtungselementen (50) der Küche (40) darstellen, wobei die Objekte (10) allesamt in einem verkleinerten Maßstab in Bezug auf die Einrichtungselemente (50) sind;
- Bereitstellen einer Unterlage (20), die eine Oberfläche (21) umfasst, von der mindestens ein Abschnitt (210) imstande ist, die Objekte (10) zu tragen;
- Ablegen der Objekte (10) der Vielzahl von Objekten (10) in dem Abschnitt (210);
- Bestimmen (101) mit dem Positionsbestimmungsmittel einer Position für jedes der Objekte (10), die in den Abschnitt (210) gestellt werden;
- Umwandeln (102) mit dem Umwandlungsmittel einer Positionsinformation (102) der Objekte (10), die in den Abschnitt (210) gestellt werden, in eine Positionsinformation (104) in der Küche (40) der Einrichtungselemente (50), die durch die Objekte (10) dargestellt sind;
- Bestimmen (106) mit dem Einrichtungsbestimmungsmittel eines Einrichtungsprojekts (107) der Küche (40) auf Basis der Positionsinformation (104) der Einrichtungselemente (50) in der Küche (40), die im vorstehenden Schritt erhalten wurde, und auf Basis mindestens einer technischen Einschränkung (105) einer Kücheneinrichtung, wobei der Schritt des Bestimmens (106) eine Überprüfung der mindestens einen technischen Einschränkung (105) umfasst, und falls diese nicht befolgt wird, eine Änderung einer Position und/oder eine Ausrichtung der Einrichtungselemente (50), die von der Positionsinformation (104) bereitgestellt wird, um die mindestens eine technische Einschränkung (105) zu erfüllen; und
- Bereitstellen (108) mit dem Ausgangsmittel der Informationen (109) über das Einrichtungsprojekt (107) der Küche (40), das in dem vorstehenden Schritt bestimmt wird;
wobei das Einrichtungsprojekt (107) und die Informationen (109) über das Einrichtungsprojekt (107) einen Plan umfassen, der eine Position der Einrichtungselemente (50) und/oder eine Liste mit den Einrichtungselementen (50) in der Küche (40) anzeigt.

11. Verfahren nach dem vorstehenden Anspruch, weiter nach dem Schritt des Ablegens der Objekte (10) und vor dem Schritt des Bestimmens (106) eines Einrichtungsprojekts (107) der Küche einen Identifikationsschritt der Objekte (10), die in dem Abschnitt (210) vorhanden sind, und das Entsprechen lassen von jedem unter ihnen einem Einrichtungselement (50) umfassend, und einen Schritt des Bestimmens, auf Basis der Entsprechung, der technischen Merkmale, die dem Einrichtungselement (50) eigen sind, wobei die technischen Merkmale, die dem Einrichtungselement (50) eigen sind, bei der Bestimmung (106) des Einrichtungsprojekts (107) der Küche (40) verwendet werden.

12. Verfahren nach Anspruch 10 oder 11, **dadurch gekennzeichnet, dass** der Schritt des Bestimmens (106) eines Einrichtungsprojekts (107) der Küche (40) eine Überprüfung mindestens einer technischen Einschränkung (105) umfasst, und für den Fall, dass die mindestens eine überprüfte technische Einschränkung (105) nicht eingehalten wird, eine Anzeige einer Nachricht oder einer automatischen Korrektur des Einrichtungsprojekts (107) derart, dass dieses die mindestens eine überprüfte technische Einschränkung (105) erfüllt.

13. Verfahren nach einem der Ansprüche 10 bis 12, **dadurch gekennzeichnet, dass** es einen Anzeigeschritt einer Informationsanfrage an einen Nutzer, einen Empfangsschritt einer Nutzerinformation und eine Berücksichtigung der Nutzerinformation bei dem Schritt des Bestimmens (106) eines Einrichtungsprojekts (107) der Küche (40) umfasst.

14. Verfahren nach einem der Ansprüche 10 bis 13, weiter eine Anzeige in dem Abschnitt (210) der Oberfläche (21) der Unterlage (20), die vorgesehen ist, damit dort Objekte (10) abgestellt werden, eines Schemas umfassend, welches Wände der Küche (40) darstellt.

## Claims

1. Design system (1) for assisting with the design of a kitchen layout (40) and comprising:
- a plurality of objects (10) for representing on a reduced scale, a plurality of layout elements (50) of said kitchen (40), said objects (10) all being on one same reduced scale with respect to the layout elements (50);
- a support (20) comprising a surface (21) of which at least one portion (210) is capable of supporting said objects (10);
- position determining means, said objects (10) and said position determining means being configured such that the latter is capable of determining (101) a position for each of the objects (10) placed on said portion (210);
- conversion means for converting position information (102) of the objects (10) placed on said portion (210) in position information (104) in said kitchen (40) of the layout elements (50) represented by said objects (10);
- layout determination means for determining (106) a project (107) for arranging said kitchen (40) based on the position information (104) of the layout elements (50) in said kitchen (40) obtained by said conversion means and based on at least one technical constraint (105) of a kitchen layout, the layout determination means being capable of modifying the position and/or the orientation of the layout means (50) provided by the position information (104) coming from the conversion means in order to satisfy the at least one technical constraint (105); and
- an outputting means to provide (108) information (109) on said layout project (107) of said kitchen (40) determined by said layout determination means;
said layout project (107) and said information (109) on said layout project (107) comprising a plan indicating a position in said kitchen (40) of the layout elements (50) and/or a list of layout elements (50).

2. Design system (1) according to the preceding claim, **characterised in that** it further comprises an identification module, said objects (10) and said identification module being configured such that the latter is capable of identifying objects (10) present on said portion (210) and to make each of them correspond with a layout element (50), the design system (1) being capable of determining, based on said correspondence, technical characteristics specific to said layout element (50) and to provide them to said layout determination means such that they are taken into account in the layout project (107) of the kitchen (40).

3. Design system (1) according to the preceding claim, **characterised in that** at least one layout element (50) has a technical characteristic indicating a position of a connection for a water inlet and/or an electricity inlet and **in that** the information (109) on the layout project (107) of the kitchen (40) comprises an indication of position of a connection for a water inlet and/or an electricity inlet.

4. Design system (1) according to any one of the preceding claims, **characterised in that** said at least one technical constraint (105) is a technical constraint (105) determined from a difference between a length associated with one or more layout elements (50) and a distance (411) between two walls (41) of the kitchen (40).

5. Design system (1) according to any one of the preceding claims, **characterised in that** said layout determination means is capable of imposing at least one additional layout component (43; 44; 45; 46) in said layout project (107) of said kitchen (40) based on said at least one technical constraint (105), the information (109) on the layout project (107) of said kitchen (40) comprising information on said at least one additional layout component (43; 44; 45; 46).

6. Design system (1) according to the preceding claim, **characterised in that** the at least one additional layout component (43; 44; 45; 46) comprises one or more layout component(s) from among the following: spinner (43) to fill a space between layout elements (50) and a wall (41) of the kitchen (40), a side panel (44) to cover an end of a line (42) of layout elements, a backsplash (45) intended to cover rear faces of layout elements (50), a work surface (46).

7. Design system (1) according to any one of the preceding claims, **characterised in that** it further comprises an interfacing means (23) to assist with the design of the kitchen layout, said interfacing means being integrated in said support (20).

8. Design system (1) according to any one of the preceding claims, further comprising a memory to record the layout project (107) of said kitchen (40).

9. Design system (1) according to any one of the preceding claims, **characterised in that** it is capable of determining an angle between a layout element (50) represented by an object (10) and a wall of the kitchen (40) and of displaying a message if this angle is in a first determined interval.

10. Method for assisting with the design of a layout of a kitchen (40) implemented using a design system (1) according to any one of the preceding claims and comprising the following steps:
- providing a plurality of objects (10) representing on a reduced scale, a plurality of layout elements (50) of said kitchen (40), said objects (10) all being one a same reduced scale with respect to the layout elements (50);
- providing a support (20) comprising a surface (21), at least one portion (210) of which is capable of supporting said objects (10);
- depositing objects (10) from said plurality of objects (10) on said portion (210);
- determining (101), with the position determination means, a position for each of the objects (10) placed on said portion (210);
- converting (102), with the conversion means, position information (102) of the objects (10) placed on said portion (210) into position information (104) in said kitchen (40) from the layout elements (50) represented by said objects (10);
- determining (106), with the layout determination means, a layout project (107) of said kitchen (40) based on the position information (104) of the layout elements (50) in said kitchen (40) obtained in the preceding step and based on at least one technical constraint (105) of a kitchen layout, the determination step (106) comprising a verification of at least one technical constraint (105) and, if this is not respected, a modification of a position and/or an orientation of the layout elements (50) provided by the position information (104) in order to satisfy the at least one technical constraint (105); and
- providing (108), with the outputting means, information (109) on the layout project (107) of said kitchen (40) determined in the preceding step;
said layout project (107) and said information (109) on said layout project (107) comprising a plan indicating a position in said kitchen (40) of the layout elements (50) and/or a list of layout elements (50).

11. Method according to the preceding claim, further comprising, after the step of depositing objects (10) and before the step of determining (106) a layout project (107) of the kitchen, a step of identifying objects (10) present on said portion (210) and to make each of them correspond with a layout element (50), and a step of determining, based on said correspondence, technical characteristics specific to said layout element (50), said technical characteristics specific to said layout element (50) being used during the determination (106) of the layout project (107) of the kitchen (40).

12. Method according to claim 10 or 11, **characterised in that** the step of determining (106) a layout project (107) of said kitchen (40) comprises a verification of at least one technical constraint (105) and, in the case where said at least one verified technical constraint (105) is not respected, a displaying of an automatic message or correction of the layout project (107) such that this respects said at least one verified technical constraint (105).

13. Method according to any one of claims 10 to 12, **characterised in that** it comprises a step of displaying an information request to a user, a step of receiving user information and a taking into account of the user information during the step of determining (106) a layout project (107) of said kitchen (40).

14. Method according to any one of claims 10 to 13, further comprising a display, on the portion (210) of said surface (21) of said support (20) provided such that objects (10) are deposited there, of a diagram representing walls of the kitchen (40).
